(19) Europäisches Patentamt
European Patent Office
Office européen des brevets

(11) EP 2 361 952 A1

(12) **EUROPEAN PATENT APPLICATION**
published in accordance with Art. 153(4) EPC

(43) Date of publication:
**31.08.2011 Bulletin 2011/35**

(21) Application number: **09834406.2**

(22) Date of filing: **21.12.2009**

(51) Int Cl.:
***C08L 77/00*** *(2006.01)* ***C08K 3/22*** *(2006.01)*
***C08K 3/32*** *(2006.01)*

(86) International application number:
**PCT/JP2009/007076**

(87) International publication number:
**WO 2010/073595 (01.07.2010 Gazette 2010/26)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **22.12.2008 JP 2008325384**
**07.01.2009 JP 2009001709**
**30.09.2009 JP 2009227687**

(71) Applicant: **Mitsui Chemicals, Inc.**
**Tokyo 105-7117 (JP)**

(72) Inventor: **SEKI, Masashi**
**Sodegaura-shi, Chiba (JP)**

(74) Representative: **HOFFMANN EITLE**
**Patent- und Rechtsanwälte**
**Arabellastraße 4**
**81925 München (DE)**

# (54) FLAME-RETARDANT POLYAMIDE COMPOSITION

(57) A halogen-free flame-retardant polyamide composition which generates no halogen compound during combustion. The composition has excellent thermal stability during high-temperature molding and is capable of showing high flame retardancy when burned. The composition is effective in inhibiting steel materials, such as the screw or cylinder of an extruder or molding machine, from corroding or wearing. The flame-retardant polyamide composition in a preferred embodiment comprises 20-60 mass% polyamide resin (A), 5-40 mass% thermoplastic resin (B) other than (A), 3-15 mass% flame retardant (C) having no halogen radicals in the molecule, and 0-50 mass% reinforcement (D), wherein the thermoplastic resin (B) satisfies the UL94V-© standards, the flame retardant (C) is a phosphinic acid salt compound, and the sum of the thermoplastic resin (B) and the flame retardant (C) is 16-45 mass%.

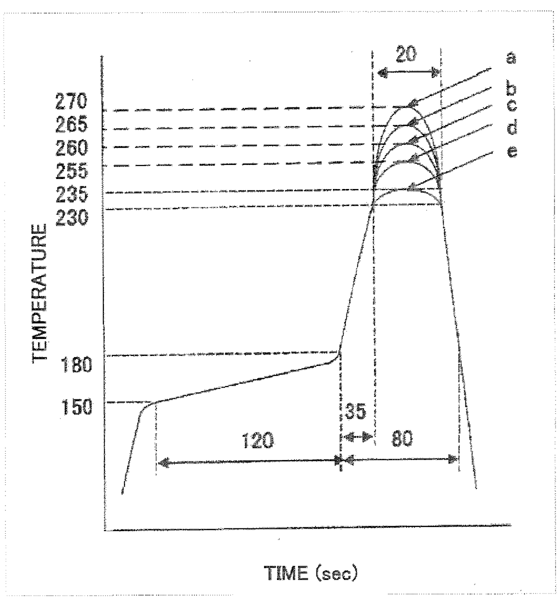


FIG.1



Printed by Jouve, 75001 PARIS (FR)

## Description

### Technical Field

The present invention relates to a halogen-free flame-retardant polyamide composition.

### Background Art

As materials for electric parts, polyamide resins have been used that can be molded into desired shape by heat melting. Widespread polyamides include aliphatic polyamides such as Nylon 6 and Nylon 66. These aliphatic polyamides have excellent moldability, but do not have heat resistance enough for them to be used as raw materials for surface-mounted components such as connectors that are exposed to high temperatures in a manufacturing process like a reflow soldering process.

Against the background of this situation, Nylon 46 was developed, a polyamide that exhibits high heat resistance. However, Nylon 46 has the disadvantage of high water absorbance. For this reason, electric parts molded of a Nylon 46 resin composition may undergo size change due to water absorption. When the molded article absorbed water, problems such as blisters may occur when heated in a reflow soldering process. In particular, in order to avoid environmental problems, surface-mounting technologies using lead-free solders have been increasingly employed. Because lead-free solders have higher melting points than conventional lead-based solders, the mounting temperature has inevitably increased by 10 to 20°C compared to conventional processes, making the use of Nylon 46 more and more difficult.

To overcome this problem aromatic polyamides were developed, which are the polycondensates of aromatic dicarboxylic acids (e.g., terephthalic acid) and aliphatic alkylene diamines. Aromatic polyamides have higher heat resistance and lower water absorbance than aliphatic polyamides such as Nylon 46.

Electric parts such as connectors are often required to have high flame retardancy sufficient to meet Underwriters Laboratories (UL) 94 V-0 requirements. To meet the above requirements, conventional polyamide compositions contain halogen-containing flame retardants such as brominated polyphenylene ether, brominated polystyrene or polybrominated styrene.

However, there may be concern that halogen-containing flame retardants such as brominated polyphenylene ether, brominated polystyrene or polybrominated styrene generate dioxin compounds when burned. For this reason, flame-retardant polyamide compositions containing halogen-free flame retardants are required in the market. As such halogen-free flame retardants, phosphinates are attracting attention (see Patent Literatures 1 to 3).

Other conventional flame-retardant resins include a composition in which polyphenylene sulfide and calcium phosphinate are abundantly formulated into a mixture of polybutylene terephthalate and ABS resin (see Patent Literature 4). This composition meets UL 94 V-0 requirements at 1/16 inch thickness, which is relatively thick. However, this composition is difficult to meet UL 94 V-0 requirements at 1/32 inch (or 0.8 mm) thickness or less - a thickness range required for thin, small parts such as electric parts suitably used for personal computers and cellular phones. On the other hand, formulation of thermoplastic resin such as polyphenylene sulfide into heat-resistant polyamide resin has been difficult, because when the resin is abundantly added, it facilitates deterioration of resin composition's mechanical properties such as toughness and heat resistance to reflow soldering.

### Citation List

### Patent Literature

[PTL 1] Japanese Patent Application Laid-Open No.2006-522842
[PTL 2] Japanese Patent Application Laid-Open No.2005-036231
[PTL 3] Japanese Patent Application Laid-Open No.2007-507595
[PTL 4] Japanese Patent Application Laid-Open No.2001-247751

### Summary of Invention

### Technical Problem

The inventors found that when a high-melting-point polyamide composition containing as a flame retardant phosphinate is molded at high temperatures, e.g., 270°C or higher, particularly 300°C or higher, some of the phosphinate

may undergo thermal decomposition to cause corrosion of steel members, such as a screw and cylinder of an extruder or molding machine. In particular, they found that formulation of phosphinates into polyamide resin containing high-hardness filler such as glass fiber remarkably accelerates corrosive wear of steel members through a repeated cycle of corrosion layer formation and corrosion layer grinding, in which a steel-corrosion layer is ground by filler, a new corrosion layer is formed, and the new corrosion layer is ground by the filler.

It has been learned that while corrosive wear of steel members can be suppressed by reducing the added amount of phosphinates, a flame retardant, smaller amounts of phosphinates impedes make it difficult to achieve flame retardancy high enough to meet UL 94 V-0 requirements at smaller thicknesses.

Specifically, although flame-retardant polyamide compositions formulated with halogen-free flame retardants and metal oxides, and flame-retardant polyamide compositions formulated with phosphinates as a flame retardant have heretofore been known in the art, none of them aims to reduce corrosive wear of steel members and therefore is insufficient in reducing corrosive wear of steel members.

It is therefore an object of the present invention to provide a halogen-free flame-retardant polyamide composition which generates no halogen compounds when burned, the flame-retardant polyamide composition exhibiting excellent molding thermally stability at high temperatures, exhibiting high flame retardancy when burned, and suppressing corrosive wear of steel members, such as a screw and cylinder of an extruder or molding machine.

**Solution to Problem**

The inventors conducted extensive studies to solve the foregoing problems pertinent in the art. As a result, they established that polyamide compositions containing polyamide resin, phosphinate (flame retardant) and specific thermoplastic resin exhibit excellent high toughness, heat resistance, molding stability and flame retardancy, while being capable of suppressing corrosive wear of steel members. That is, a first aspect of the present invention relates to flame-retardant polyamide compositions given below.

[1] A flame-retardant polyamide composition including:

20 to 60wt% polyamide resin (A);
5 to 40wt% thermoplastic resin (B) other than polyamide resin (A);
3 to 15wt% flame retardant (C) having no halogens in the molecule thereof; and
0 to 50wt% reinforcement (D),

wherein thermoplastic resin (B) meets UL 94 V-0 requirements, flame retardant (C) is a phosphinate, and a total amount of thermoplastic resin (B) and flame retardant (C) is 16 to 45wt%.

[2] The flame-retardant polyamide composition according to [1], wherein thermoplastic resin (B) has a melting point and/or a glass transition temperature of 200 to 400°C, and meets UL 94 V-0 requirements at 0.8mm thickness.

[3] The flame-retardant polyamide composition according to [1], wherein the wt% amount of thermoplastic resin (B) is equal to or larger than the wt% amount of flame retardant (C).

[4] The flame-retardant polyamide composition according to [1], wherein thermoplastic resin (B) is polyphenylene sulfide.

[5] The flame-retardant polyamide composition according to [1], further including a metal compound component selected from metal hydroxide (E-1) and metal oxide (E-2), metal hydroxide (E-1) and metal oxide (E-2) having an average particle diameter of 0.01 to 20 $\mu$m.

[6] The flame-retardant polyamide composition according to [5], wherein the metal compound component selected from metal hydroxide (E-1) and metal oxide (E-2) is at least one compound selected from the group consisting of metal oxides and composite oxides of zinc.

The inventors also established that polyamide compositions containing polyamide resin, phosphinate (flame retardant) and metal compound containing a specific element exhibit excellent molding stability, flame retardancy and corrosive wear resistance of steel members. That is, a second aspect of the present invention relates to polyamide compositions given below.

[7] A flame-retardant polyamide composition including:

20 to 80wt% polyamide resin (A);
5 to 40wt% flame retardant (C) having no halogens in the molecule thereof;

0 to 50wt% reinforcement (D); and
0.05 to 2wt% metal compound component selected from metal hydroxide (E-1) and metal oxide (E-2),

wherein flame retardant (C) is a phosphinate,
metal hydroxide (E-1) and metal oxide (E-2) are a compound containing an element of Groups 2 to 12 in the periodic table, and
metal hydroxide (E-1) and metal oxide (E-2) have an average particle diameter of 0.01 to 20 μm.
[8] The flame-retardant polyamide composition according to [7], wherein the metal compound component is metal oxide (E-2).
[9] The flame-retardant polyamide composition according to [7], wherein the amount of polyamide resin (A) is 20 to 60wt%, and the amount of flame retardant (C) is 5 to 15wt%.
[10] The flame-retardant polyamide composition according to [8], wherein metal oxide (E-2) has an average particle diameter of 0.01 to 10 μm.
[11] The flame-retardant polyamide composition according to [8], wherein metal oxide (E-2) is at least one compound selected from the group consisting of oxides of iron, oxides of magnesium, oxides of zinc, and composite oxides of zinc.
[12] The flame-retardant polyamide composition according to [11], wherein the composite oxide of zinc is zinc stannate.

Preferable embodiments of flame-retardant polyamide compositions of the present invention are given below.

[13] The flame-retardant polyamide composition according to [1] or [7], wherein polyamide resin (A) has a melting point of 270 to 340°C.
[14] The flame-retardant polyamide composition according to [1] or [7], wherein flame retardant (C) contains a phosphinate represented by formula (I), and/or a bisphosphinate represented by formula (II), and/or a polymer thereof:

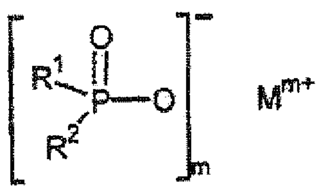
(I)

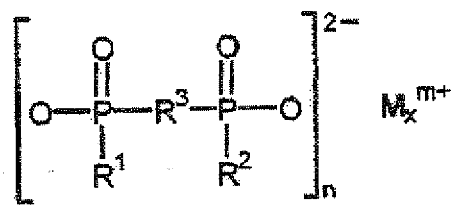
(II)

where $R^1$ and $R^2$, which are identical or different, are linear or branched $C_1$-$C_6$ alkyl and/or aryl; $R^3$ is linear or branched $C_1$-$C_{10}$ alkylene, $C_6$-$C_{10}$ arylene, $C_6$-$C_{10}$ alkylarylene, or $C_6$-$C_{10}$ arylalkylene; M is Mg, Ca, Al, Sb, Sn, Ge, Ti, Zn, Fe, Zr, Ce, Bi, Sr, Mn, Li, Na, K, and/or protonated nitrogen base; m is 1 to 4; n is 1 to 4; and x is 1 to 4.

[15] The flame-retardant polyamide composition according to [1] or [7], wherein polyamide resin (A) has multifunctional carboxylic acid unit (a-1) and multifunctional amine unit (a-2) having 4 to 25 carbon atoms, the carboxylic acid unit (a-1) composed of 40 to 100mol% terephthalic acid unit, and 0 to 30mol% multifunctional aromatic carboxylic acid unit other than (terephthalic acid and/or 0 to 60mol% multifunctional aliphatic carboxylic acid unit having 4 to 20 carbon atoms.

[16] The flame-retardant polyamide composition according to [1] or [7], wherein reinforcement (D) is fibrous material.

[17] A molded article obtained by molding of the flame-retardant polyamide composition according to [1] or [7].

[18] A method of manufacturing a molded article including:

injection molding the flame-retardant polyamide composition according to [1] or [7] in an inert gas atmosphere.

[19] An electric part obtained by molding of the flame-retardant polyamide composition according to [1] or [7].

**Advantageous Effects of Invention**

Flame-retardant polyamide compositions of the present invention are halogen-free and thus may not generate hydrogen halide when burned, imposing less burden to the environment. Moreover, the flame-retardant polyamide compositions offer improved mechanical properties such as high toughness, and thus exhibit excellent heat resistance to reflow soldering and excellent flame retardancy. Further, the flame-retardant polyamide compositions exhibit excellent thermal stability and flame retardancy upon molding, and a molded article can be manufactured therefrom without causing corrosive wear of steel members such as a screw and cylinder of an extruder or molding machine. Thus, flame-retardant polyamide compositions of the present invention are extremely valuable in industrial applications.
Thus, molded articles of the flame-retardant polyamide compositions of the present invention are particularly suitable as electric parts such as thin and fine-pitch connectors, as well as parts for surface-mounting using high-melting point solder such as lead-free solder.

**Brief Description of Drawings**

Fig.1 is a graph of reflow process temperature vs. reflow process time in heat resistance tests conducted in Examples and Comparative Examples.

**Description of Embodiments**

Hereafter, the present invention will be described in detail.

[Polyamide Resin (A)]

The flame-retardant polyamide composition of the present invention contains polyamide resin (A). Polyamide resin (A) is not particularly limited as long as it can endure under the temperatures in a reflow soldering process. Polyamide resin (A) preferably has multifunctional carboxylic acid unit (a-1) and multifunctional amine unit (a-2) described below.

[Multifunctional Carboxylic Acid Unit (a- 1)]

Multifunctional carboxylic acid unit (a-1) constituting polyamide resin (A) contained in the flame-retardant polyamide composition of the present invention contains 40 to 100mol% terephthalic acid unit, 0 to 30mol% multifunctional aromatic carboxylic acid unit other than terephthalic acid, and 0 to 60mol% multifunctional aliphatic carboxylic acid unit having 4 to 20 carbon atoms, based on the total weight of multifunctional carboxylic acid unit (a-1).
Examples of the multifunctional aromatic carboxylic acid unit other than terephthalic acid include isophthalic acid, 2-methyl terephthalic acid, naphthalene dicarboxylic acid, phthalic anhydride, trimellitic acid, pyromellitic acid, trimellitic anhydride, and pyromellitic anhydride, with units derived from isophthalic acid being particularly preferable. These compounds may be used alone or in combination. When a multifunctional carboxylic acid compound having three or more functional groups is added, the contained amount needs to be adjusted so as to avoid gelation of resin. More specifically, it is preferably contained in an amount of not greater than 10mol% based on the total amount of carboxylic acid units.
The multifunctional aliphatic carboxylic acid unit is derived from a multifunctional aliphatic carboxylic acid compound having 4 to 20 carbon atoms, preferably 4 to 12 carbon atoms, more preferably 6 to 10 carbon atoms. Examples thereof include adipic acid, suberic acid, azelaic acid, sebacic acid, decanedicarboxylic acid, undecanedicarboxylic acid, and dodecanedicarboxylic acid. Among them, adipic acid is particularly preferable in view of improving mechanical properties. Additionally, a multifunctional carboxylic acid having three or more functional groups may be added as needed; however, the contained thereof amount should be adjusted so as to avoid gelation of polyamide resin. More specifically, it needs to be contained in an amount of not greater than 1.0mol% based on the total amount of carboxylic acid units.

Preferably, polyamide resin (A) contains 40 to 100mol%, preferably 50 to 100mo%, more preferably 60 to 100mol%, further preferably 60 to 70mol% terephthalic acid unit, and 0 to 30mol%, preferably 0 to 10mol% multifunctional aromatic carboxylic acid unit other than terephthalic acid, based on the total weight of multifunctional carboxylic acid unit (a-1). As the proportion of the multifunctional aromatic carboxylic acid unit, especially the proportion of terephthalic acid, increases, water absorbance decreases and thereby heat resistance tends to increase. In particular, polyamide resin (A) contained in a polyamide composition used in a reflow soldering process using lead-free solder preferably contains the terephthalic acid unit in an amount of 55mol% or more, preferably 60mol% or more.

Further, polyamide resin (A) preferably contains a multifunctional aliphatic carboxylic acid unit having 4 to 20 carbon atoms in an amount of 0 to 60mol%, preferably 0 to 50mo%, more preferably 30 to 40mol%.

[Multifunctional Amine Unit (a-2)]

Multifunctional amine unit (a-2) constituting polyamide resin (A) contained in the flame-retardant polyamide composition of the present invention is a linear and/or branched multifunctional aliphatic amine unit having 4 to 25 carbon atoms, preferably a linear and/or branched multifunctional aliphatic amine unit having 4 to 10 carbon atoms, more preferably a linear multifunctional aliphatic amine unit having 4 to 8 carbon atoms. Multifunctional aliphatic amine unit (a-2) may have a multifunctional alicyclic amine unit.

Specific examples of the linear multifunction alaliphatic amine unit include 1,4-diaminobutane, 1,6-diaminohexane, 1,7-diaminoheptane, 1,8-diaminooctaone, 1,9-diaminononane, 1,10-diaminodecane, 1,11-diaminoundecane, and 1,12-diaminododecane. Among them, 1,6-diaminohexane is preferable.

Specific examples of the linear aliphatic diamine unit having a side chain include 2-methyl-1,5-diammopentane, 2-methyl-1,6-diaminohexane, 2-methyl-1,7-diaminoheptane, 2-methyl-1,8-diaminooctane, 2-methyl-1,9-diaminononane, 2-methyl-1,10-diaminodecane, and 2-methyl-1,11-diaminoundecane. Among them, 2-methyl-1,5-diaminopentane and 2-methyl-1,8-diaminooctane are preferable.

Examples of the multifunctional alicyclic amine unit include units derived from alicyclic diamines, such as 1,3-diaminocyclohexane, 1,4-diaminocyclohexane, 1,3-bis(aminomethyl)cyclohexane, 1,4-bis(aminomethyl)cyclohexane, isophoronediamine, piperazine, 2,5-dimethylpiperazine, bis(4-aminocyclohexyl)methane, bis(4-aminocyclohexyl)propane, 4,4'-diamino-3.3'-dimethyldicyclohexylpropane, 4,4'-diamino-3,3'-dimethyldicyclohexylmethane, 4,4'-diamino-3,3'-dimethyl-5,5'-dimethyldicyclohexylmethane, 4,4'-diamino-3,3'-dimethyl-5,5'-dimethyldicyclohexylpropane, $\alpha,\alpha'$-bis (4-aminocyclohexyl)-p-diisopropylbenzene, $\alpha,\alpha'$-bis(4-aminocycloexyl)-m-diisopropylbenzene, $\alpha,\alpha'$-bis(4-aminocyclohexyl)-1,4-cyclohexane, and $\alpha,\alpha'$-bis(4-aminocycoohexyl)-1,3-cyclohexane. Among these alicyclic diamine units, 1,3-diaminocyclohexane, 1,4-diaminocyclohexane, bis(aminomethyl)cyclohexane, bis(4-aminocyclohexyl)methane, and 4,4'-diamino-3,3'-dimethyldicyclohexylmethane are perferable, with the units derived from alicyclic diamines, such as 1,3-diaminocyclohexane, 1,4-diaminocyclohexane, bis(4-aminocyclohexyl)methane, 1,3-bis(aminohexyl)methane, and 1,3-bis(aminomethyl)cyclohexane being most preferable. When using a multifunctional amine compound having three or more functional groups, the contained amount needs to be adjusted so as to avoid gelation of resin. More specifically, it is preferably contained in an amount of not greater than 10mol% based on the total amount of amine units.

More preferably, multifunctional aliphatic amine unit (a-2) consists only of the linear multifunctional aliphatic amine unit. Specific preferable examples of the linear multifunctional amine unit include 1,4-diaminobutane, 1,6-diaminohexane, 1,7-diaminoheptane, 1,8-diaminooctaone, 1,9-diaminononane, 1,10-diaminodecane, 1,11-diaminoundecane, and 1.12-diaminododecane. Among them, 1,6-diaminohexane is preferable.
When these linear multifunctional amines are used, there is a good tendency that heat resistance especially increases.

The intrinsic viscosity [$\eta$] of polyamide resin (A) contained in the flame-retardant polyamide composition of present invention, as measured in 96.5% sulfuric acid at 25°C, is 0.5 to 1.2 dl/g, preferably 0.75 to 1.15 dl/g, more preferably 0.75 to 1.05 dl/g. When the intrinsic viscosity of polyamide resin (A) falls within any of these ranges, a polyamide composition can be obtained that exhibits high flow ability, heat resistance and toughness.

Polyamide resin (A) contained in the flame-retardant polyamide composition of the present invention is crystalline and therefore has a melting point. The melting point (Tm) of polyamide resin (A) may be found as a temperature corresponding to an endothermic peak in a differential scanning calorimetry (DSC) curve, which is obtained by heating polyamide resin (A) at a heating rate of 10°C/min using a differential scanning calorimeter. The melting point of polyamide resin (A) measured in this manner is preferably 270 to 340°C, more preferably 300 to 340°C, further preferably 315 to 330°C. Polyamide resin (A) whose melting point falls within these ranges exhibit particularly excellent heat resistance. Moreover, when the melting point is 270°C or above, or 310°C or above, particularly within 315 to 330°C, the flame-retardant polyamide composition of the present invention exhibits heat resistance sufficient to endure high temperatures in a lead-free reflow soldering process, even in a reflow soldering process using lead-free solder with a high melting point. On the other hand, when the melting point is 340°C or below, which is below the decomposition temperature (350°C) of the polyamide, it is possible to attain sufficient thermal stability without causing generation of decomposition gas or color changes in the molded article.

[Thermoplastic Resin (B)]

The flame-retardant polyamide composition of the present invention may contain thermoplastic resin (B). A molded article formed of the flame-retardant polyamide composition of the present invention containing thermoplastic resin (B) can have high toughness, flow ability, heat resistance and flame retardancy.

Thermoplastic resin (B) meets UL 94 V-0 requirements. Specifically, thermoplastic resin (B) preferably by itself exhibits flame retardancy that meets UL 94 V-0 requirements at 0.8 mm thickness. As long as thermoplastic resin (B) meets UL 94 V-0 requirements, the polyamide composition of the present invention exhibits flame retardancy that meets UL 94 V-0 requirements without causing reduction in toughness, flow ability, and heat resistance.

The melting point and/or glass transition point of thermoplastic resin (B) are/is preferably 200˚C to 400˚C. A molded article formed of the flame-retardant polyamide composition containing thermoplastic resin (B) whose melting point/glass transition temperature falls within this range can exert heat resistance in a surface-mounting process, particularly in a surface-mounting process using lead-free solder.

MFR of thermoplastic resin (B), as measured at a load of 5kg at 316˚C in accordance with ASTMD 1238 Procedure B, is preferably 5 to 6,000 g/10min, more preferably 50 to 3,000 g/10min, further preferably 50 to 2,000 g/10min, most preferably 50 to 1,700 g/10min. Thermoplastic resin (B) having MFR that falls within any of these ranges is easily finely dispersed in the flame-retardant polyamide composition of the present invention. It is thus possible to provide a flame-retardant polyamide composition that suppresses corrosion of steel members such as a screw of an extruder or molding machine, as well as exhibits the above physical properties. The mechanism by which corrosion is suppressed remains elusive at present; however, a possible mechanism is that, during preparation of a flame-retardant polyamide composition, thermoplastic resin (B) interacts with flame retardant (C) (later described), coating flame retardant (C) and preventing flame retardant (C) or degradation product thereof from corroding steel members of an extruder and molding machine.

Examples of thermoplastic resin (B) include polyphenylene sulfide (PPS), liquid crystal polyester (LCP), polyether sulphone (PES), polyether ether ketone (PEEK), polyimides, and polyamidoimides. These thermoplastic resins may be used alone or in combination. Among them, polyphenylene sulfide is preferable. Further, linear polyphenylene sulfide is preferable over crosslinked polyphenylene sulfide, because higher heat resistance and flow ability can be imparted to a flame-retardant polyamide composition.

Thermoplastic resin (B) is preferably incompatible with polyamide resin (A), and is preferably dispersed in the matrix of polyamide resin (A) in the form of particles with a number-average particle diameter of 0.1 to 20 μm. A preferable lower limit of number-average particle diameter is 0.5 μm, and a preferable upper limit is 10 μmand more preferably 5 μm.

In particular, when the flame-retardant polyamide composition of the present invention is molded at 270˚C or above, phosphinate (C) (later described) is preferably coated with thermoplastic resin (B). With this form, it is expected that the flame-retardant polyamide composition further suppresses corrosion of steel members, such as a screw of an extruder or molding machine.

It is preferable that dispersed particles of thermoplastic resin (B) satisfy the above particle size range and that thermoplastic resin (B) be linear polyphenylene sulfide, in order for the flame-retardant polyamide composition to achieve high flame retardancy, especially high heat resistance and toughness, and reduced corrosive wear of steel members.

Chlorine atoms and bromine atoms contained in the flame-retardant polyamide composition of the present invention are often derived from thermoplastic resin (B). In order to set the total amount of chlorine and bromine contained in a flame-retardant polyamide composition to 1,000 ppm or less, the total amount of chlorine and bromine atoms in thermoplastic resin (B) is set to 10,000 ppm or less, preferably 5,000 ppm or less, more preferably 3,000 ppm or less, further preferably 2,000 ppm or less.

[Flame retardant (C)]

Flame retardant (C) in the present invention, which is free from halogen atoms in the molecule, is added in order to reduce flammability of resin. Flame retardant (C) is preferably a phosphinate, more preferably a metal phosphinate.

Representative examples of flame retardant (C) include compounds having the following formula (I) or (II)

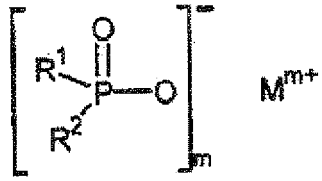

(I)

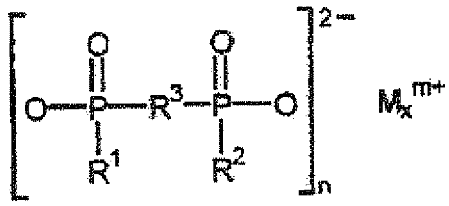

(II)

In formula (I) and (II) above, $R^1$ and $R^2$, which are identical or different, are linear or branched $C_1$-$C_6$ alkyl and/or aryl; $R^3$ is linear or branched $C_1$-$C_{10}$alkylene, $C_6$-$C_{10}$ arylene, $C_6$-$C_{10}$ alkylarylene, or $C_6$-$C_{10}$ arylalkylene; M is Mg, Ca, Al, Sb, Sn, Ge, Ti, Zn, Fe, Zr, Ce. Bi, Sr, Mn, Li, Na, K, and/or protonated nitrogen base; m is 1 to 4; n is 1 to 4; and x is 1 to 4.

Specific examples of phosphinates include calcium dimethylphosphinate, magnesium dimethylphosphinate, aluminum dimethylphosphinate, zinc dimethylphosphinate, calcium ethylmethylphosphinate, magnesium ethylmethylphosphinate, aluminum ethylmethylphosphinate, zinc ethylmethylphosphinate, calcium diethylphosphinate, magnesium diethylphosphinate, aluminum diethylphosphinate, zinc diethylphosphinate, calcium methyl-n-propylphosphinate, magnesium methyl-n-propylphosphinate, aluminum methyl-n-propylphosphinate, zinc methyl-n-propylphosphinate, calcium methanedi(methylphophinate), magnesium methanedi(methylphophinate), aluminum methanedi(methylphophinate), zinc methanedi(methylphophinate), calcium benzene-1,4-(dimethylphosphinate), magnesium benzene-1,4-(dimethylphosphinate), aluminum benzene-1,4-(dimethylphosphinate), zinc benzene-1,4-(dimethylphosphinate), calcium methylphenylphosphinate, magnesium methylphenylphosphinate, aluminum methylphenylphosphinate, zinc methylphenylphosphinate, calcium diphenylphosphinate, magnesium diphenylphosphinate, aluminum diphenylphosphinate, and zinc diphenylphosphinate. Among them, calcium dimethylphosphinate, aluminum dimethylphosphinate, zinc dimethylphosphinate, calcium ethylmethylphosphinate, aluminum ethylmethylphosphinate, zinc ethylmethylphosphinate, calcium diethylphosphinate, aluminum diethylphosphinate, and zinc diethylphosphinate are preferable, with aluminum diethylphosphinate being further preferable.

Representative examples of flame retardant (C) containing phosphinates in the present invention include EXOLIT OP1230 and EXOLIT OP930 available from Clariant (Japan) K.K.

[Reinforcement (D)]

The flame-retardant polyamide composition of the present invention may contain reinforcement (D); various inorganic fillers in the form of fiber, powder, grain, plate, needle, cloth, mat, etc., can be used either singly or in combination. More specifically, reinforcement (D) may be a powdery or plate-shaped inorganic compound such as silica, silica-alumina, calcium carbonate, titanium dioxide, talc, Wollastonite, diatomite, clay, kaoline, spherical glass, mica, gypsum, colcothar; needle-shaped inorganic compound such as potassium titanate; inorganic fiber such as glass fiber, potassium titanate fiber, metal-coated glass fiber, ceramic fiber, Wollastonite, carbon fiber, metal carbide fiber, metal curing product fiber, asbestos fiber or boron fiber; or organic filler such as aramid fiber or carbon fiber. Reinforcement (D) is preferably fibrous material, with glass fiber being more preferable.

When reinforcement (D) is fibrous material, especially glass fiber, moldability of the polyamide composition of the present invention is enhanced, and besides, mechanical properties (e.g., tensile strength, flexural strength and flexural modulus) and heat resistance properties (e.g., heat distortion temperature) of a molded article produced from the polyamide composition are improved.

The above effect is significant particularly where glass fiber is employed. Glass fiber is generally 0.1 to 20 mm in average length, preferably 0.2 to 6 mm in average length. Moreover, glass fiber's aspect ratio (L (average length) /D (average outer diameter)) is generally 10 to 5,000, preferably 2,000 to 3,000. Glass fiber having an average length and aspect ratio that respectively fall within the above ranges is suitably used.

Further, when fibrous reinforcement (D) is used, it is effective to employ fibrous material whose section has

an aspect ratio (major axis-to-minor axis ratio) of greater than 1, more preferably 1.5 to 6.0, for the purpose of preventing possible warpage of a molded article.

The reinforcement may be surface-treated with a silane coupling agent or titanium coupling agent; for example, the filler may be treated with silane compound such as vinyltriethoxysilane, 2-aminopropyltriethoxysilane or 2-glycidoxypropyltriethoxysilane.

Among the materials for reinforcement (D), fibrous fillers may be coated with a binder. Examples of the binder include acrylic compounds typified by (meth)acrylic acid and (meth)acrylate; carboxylic acid compounds having a carbon-carbon double bond other than methacrylic acid, such as maleic anhydride; epoxy compounds; urethane compounds; and amine compounds. Alternatively, these compounds may be combined to prepare reinforcement (D). Preferred combinations include combinations of acrylic compounds and carboxylic acid compounds, combinations of urethane compounds and carboxylic acid compounds, and combinations of urethane compounds and amine compounds. The above-mentioned surface treating agents may be combined with the binders, whereby the compatibility of fibrous filler with other components in the composition increases, improving appearance and strength characteristics.

Reinforcement (D) is preferably added in the flame-retardant polyamide composition of the present invention in an amount of 0 to 50wt%, more preferably 10 to 45wt%.

[Metal Hydroxide (E-1)/Metal Oxide (E-2)]

The flame-retardant polyamide composition of the present invention may contain a metal compound component selected from metal hydroxide (E-1) and metal oxide (E-2), preferably contains metal oxide (E-2). By adding a metal compound component, corrosive wear of steel members caused by the polyamide composition can be further suppressed. Compounds used as metal hydroxide (E-1) and metal oxide (E-2) can be used alone or in combination.

Metals for metal hydroxide (E-1) and metal oxide (E-2) are preferably metals of Groups 1 to 12 in the periodic table, more preferably metals of Groups 2 to 12. In particular, as metal oxide (E-2), oxides of elements of Groups 2 to 12 are preferable, with oxides of elements of Groups 4 to 12 being more preferable, and with oxides of elements of Groups 7 to 12 being further preferable.

Metal hydroxide (E-1) and metal oxide (E-2), especially metal oxide (E-2), are effective in suppressing corrosive wear of steel members such as a screw and cylinder, dice and nozzle of such a device as an extruder or molding machine. An extruder is a device used to produce a flame-retardant polyamide composition, and a molding machine is a device used to produce a molded article from a flame-retardant polyamide composition. Metal hydroxide (E-1) and metal oxide (E-2) exhibit high corrosive wear suppression effect particularly at high temperatures, e.g., at a molding temperature of 270˚C or above.

When a metal compound component selected from metal hydroxide (E-1) and metal oxide (E-2) is used, it is added in a flame-retardant polyamide composition in an amount of 0.05 to 2wt%, preferably 0.1 to 1wt%, more preferably 0.1 to 0.5wt%. When the amount of the mental compound component is less than 0.05wt%, it results in insufficient corrosive wear suppression effect. On the other hand, when the amount of the metal compound component content is greater than 2wt%, it tends to result in low flame retardancy, heat resistance and molding thermal stability, though corrosive wear suppression effect is attained.

Metal hydroxide (E-1) and metal oxide (E-2) may be particles with an average particle diameter of 0.01 to 20 μm. The particles with an average particle diameter of 0.01 to 10 μm, more preferably 0.01 to 5 μm, further preferably 0.01 to 3 μm, still further preferably 0.01 to μm, most preferably 0.01 to 0.3 μm are preferably used. This is to further enhance corrosive wear suppression effect. The BET specific surface area of metal hydroxide (E-1) or metal oxide (E-2) may be 1 to 50 $m^2$/g, preferably 3 to 40 $m^2$/g, more preferably 5 to 40 $m^2$/g. When average particle diameter and BET specific surface area fall within the above ranges, a molded article having excellent flame retardancy and heat resistance can often be produced while suppressing corrosive wear of steel members. When average particle diameter exceeds 20 μm or BET specific surface area is less than 1 $m^2$/g, it may result in failure to attain sufficient corrosive wear suppression effect. When average particle diameter is less than 0.01 μm or BET specific surface area exceeds 50 $m^2$/g, it tends to result in low flame retardancy, heat resistance and molding thermal stability, though corrosive wear suppression effect is attained.

Preferable metal elements for metal hydroxide (E-1) and metal oxide (E-2) used in the present invention include iron, magnesium, and zinc, with magnesium and zinc being more preferable, and with zinc being most preferable.

Specific preferable examples of metal hydroxide (E-1) or metal oxide (E-2) include magnesium hydroxide, magnesium oxide, and zinc oxide. Other preferable examples include composite oxides of metals; more preferable examples are composite oxides of zinc, such as zinc stannate and hydroxy zinc stannate. Among them, zinc oxide, zinc stannate, magnesium oxide, and magnesium hydroxide are preferable. Moreover, single metal oxides are preferable over composite oxides; specific preferable examples include zinc oxide.

Note that borates, one of composite oxides, are excluded from metal oxide (E-2) in the present invention. When a potential Lewis acid element, such as boron, is added, the effect of trapping the decomposition product of flame

retardant (later described) may decrease, so that corrosion suppression effect is difficult to be exerted.

[[Other additives]

The flame-retardant polyamide composition of the present invention may contain, in addition to the above components, various known additives, such as other flame retardant synergists, flame retardants, antioxidants, radical scavengers, heat stabilizers, weathering stabilizers, flow ability improvers, plasticizers, thickeners, antistatic agents, mold release agents, pigments, dyes, inorganic or organic fillers, nucleating agents, fibrous reinforcing agents and/or inorganic compounds (e.g., carbon black, talc, clay, mica) in amounts that do not affect the object of the present invention. The flame-retardant polyamide composition of the present invention may contain additives such as general-purpose ion scavengers. Known ion scavengers include hydrotalcite and zeolite. In particular, addition of a fibrous reinforcing agent enhances heat resistance, flame retardancy, rigidity, tensile strength, flexural strength and impact strength of the flame-retardant polyamide composition of the present invention.

Flame retardant synergists are effective in imparting high flame retardancy with small amounts of flame retardant. Specific examples include metal oxides and metal hydroxides, which can be used alone or in combination. More specifically, zinc borate, boehmite, zinc stannate, iron oxide and tin oxide are preferable, with zinc borate being more preferable.

When a metal oxide or metal hydroxide is used as a flame retardant synergist, it is added in the flame-retardant polyamide composition of the present invention in an amount of 0.5 to 5 wt%, preferably 1 to 3wt%. By adding a flame retardant synergist in an amount falling within the above range, stable flame retardancy and molding thermal stability can be imparted to the flame-retardant polyamide composition.

Known flame retardant synergists include phosphorus/nitrogen compounds represented by melamine phosphate compounds, melamine compound and condensates thereof, and nitrogen compound represented by melamine cyanurate. At high temperatures e.g., at a molding temperature of 270˚C or above, these compounds may deteriorate thermal stability because decomposition of resin and flame retardant is facilitated by these compounds.

The flame retardant synergist may be at least one compound selected from the group consisting of a cyclic phosphazene compound represented by formula (1) and/or a linear phosphazene compound represented by formula (2). The amount of phosphazene compound in the flame-retardant polyamide composition is 0.01 to 10wt%, preferably 0.5 to 5wt%.

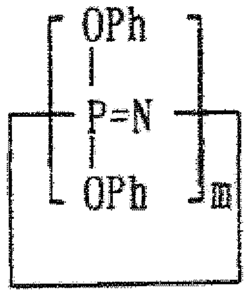

(1)

where m is an integer of 3 to 25, and Ph is phenyl group.

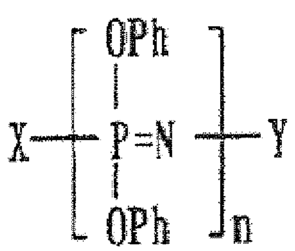

(2)

where X is -N=P(OPh)$_3$ or -N=P(O)OPh, Y is P(OPh)$_4$ or -P(O)(OPh)$_2$, n is an integer of 3 to 1,000, and Ph is phenyl group.

The flame-retardant polyamide composition of the present invention may further contain additional polymers as long as the object of the present invention is achieved. Examples thereof include polyolefins such as polyethylene,

polypropylene, poly-4-methyl-1-pentene, ethylene/ 1 -butene copolymer, propylene/ethylene copolymer, propylene/1-butene copolymer and polyolefin elastomer, polystyrene, polyamide, polycarbonate, polyacetal, polysulfone, polyphenylene oxide, fluororesin, silicone resin, SEBS, and Teflon®. Additional examples include modified polyolefins. Modified polyolefins are polyolefins which are modified with carboxyl group, acid anhydride group, amino group or the like Examples thereof include modified polyolefin elastomers such as modified polyethylene, modified aromatic vinyl compound/conjugated diene copolymers (e.g., modified SEBS) or hydrogenated products thereof, and modified ethylene/propylene copolymer. It is preferable that these polymer components do not to meet UL 94 V-0 requirements.

The amount of additional polymer in the flame-retardant polyamide composition is preferably 4 wt% or less, more preferably 2wt% or less, further preferably 1 wt% or less, based on the total weight (100wt%) of the components of the composition.

[Flame-retardant Polyamide Composition]

The polyamide composition of the present invention contains the above-described polyamide resin (A) and flame retardant (C) as essential components, and is of two types depending on whether or not thermoplastic resin (B) other than polyamide resin (A) is contained as an essential component.

[First Flame-retardant Polyamide Composition]

A first flame-retardant polyamide composition of the present invention contains the above-mentioned thermoplastic resin (B) as an essential component.

The first flame-retardant polyamide composition preferably contains polyamide resin (A) in an amount of 20 to 60wt%, more preferably 35 to 50wt%, based on the total amount of the components of the polyamide composition. When the amount of polyamide resin (A) in the first flame-retardant polyamide composition is 20wt% or more, sufficient toughness can be attained, and when the amount is 60wt% or less, a sufficient amount of flame retardant can be added, whereby it is possible to produce a resin composition that meets a predetermined flame retardancy rating.

The first flame-retardant polyamide composition contains thermoplastic resin (B) in an amount of 5 to 40wt%, more preferably 5 to 30wt%, based on the total amount of components of the polyamide composition. When the amount of thermoplastic resin (B) is 5wt% or more, it is possible to ensure sufficient flame retardancy even when smaller amounts of flame retardant are added, as well as to suppress corrosive wear of steel members. When the amount of thermoplastic resin (B) is 40wt% or less, toughness and heat resistance of the flame-retardant polyamide composition do not decrease.

The total amount of chlorine and bromine atoms contained in the flame-retardant polyamide composition of the present invention, is preferably 1,000 ppm or less. In particular, in the case of the first flame-retardant polyamide composition, the total amount of chlorine and bromine contained in thermoplastic resin (B) is preferably 10,000 ppm or less, more preferably 5,000 ppm or less, further preferably 3,000 ppm or less, most preferably 2,000 ppm or less.

The first flame-retardant polyamide composition contains flame retardant (C) in an amount of 3 to 15wt%, preferably 3 to 12wt%, more preferably 5 to 10wt%, based on the total amount of components of the polyamide composition. When the amount of flame retardant (C) in the flame-retardant polyamide composition is 3wt% or more, it is possible to provide sufficient flame retardancy, and when the amount is 15wt% or less, it is possible to provide corrosive wear suppression effect. Moreover, when the wt% amount of thermoplastic resin (B) is equal to or larger than that of flame retardant (C), corrosive wear of steel members may be further suppressed.

The total amount of thermoplastic resin (B) and flame retardant (C) in the first flame-retardant polyamide composition is preferably 16 to 45 wt%. When the total amount of component (B) and component (C) is 16wt% or more, it is possible for the flame-retardant polyamide composition to have sufficient flame retardancy. When the total amount is 45wt% or less, toughness and heat resistance of the flame-retardant polyamide composition do not decrease.

The first flame-retardant polyamide composition contains reinforcement (D) in an amount of 0 to 50wt%, preferably 10 to 45wt%, based on the total amount of components of the polyamide composition. When the amount of reinforcement (D) is 50wt% or less, flow ability during injection molding does not decrease.

The first flame-retardant polyamide composition preferably contains a metal compound component selected from above-mentioned metal hydroxide (E-1) and metal oxide (E-2), preferably in an amount of 0.05 to 2wt%, more preferably 0.1 to 1wt%, further preferably 0.1 to 0.5wt%.

Metal hydroxide (E-1) and metal oxide (E-2) are preferably particles with an average particle diameter of 0.01 to 20 $\mu$m, preferably 0.01 to 10 $\mu$m, more preferably 0.01 to 5 $\mu$m, further preferably 0.01 to 3 $\mu$m, still further preferably 0.01 to 1 $\mu$m, most preferably 0.01 to 0.3 $\mu$m.

Metal hydroxide (E-1) and metal oxide (E-2) can provide the first flame-retardant polyamide composition with an effect of suppressing corrosive wear of steel members. A possible mechanism by which such an effect is exerted is trapping of decomposition products of flame retardant (C) by metal hydroxide (E-1) and metal oxide (E-2), as are decomposition products of flame retardant (C) in the second flame-retardant polyamide composition later described.

[Second Flame-retardant Polyamide Composition]

The second flame-retardant polyamide composition preferably contain polyamide resin (A) in an amount of 20 to 80wt%, more preferably 35 to 60wt%, based on the total amount of the components of the polyamide composition. When the amount of polyamide resin (A) in the second flame-retardant polyamide composition is 20wt% or more, sufficient toughness can be attained, and when the amount is 80wt% or less, a sufficient amount of flame retardant can be added, and thereby flame retardancy is attained.

The second flame-retardant polyamide composition preferably contains flame retardant (C) in an amount of 5 to 40wt%, preferably 7 to 20wt%, based on the total amount of components of the polyamide composition. When the amount of flame retardant (C) in the second flame-retardant polyamide composition is 5wt% or more, it is possible to provide sufficient flame retardancy, and when the amount is 40wt% or less, flow ability does not decrease during injection molding.

The second flame-retardant polyamide composition contains reinforcement (D) in an amount of 0 to 50wt%, preferably 10 to 45wt%, based on the total amount of components of the polyamide composition. When the amount of reinforcement (D) is 50wt% or less, flow ability does not decrease during injection molding.

The second flame-retardant polyamide composition preferably contains a metal compound component selected from above-mentioned metal hydroxide (E-1) and metal oxide (E-2), preferably metal oxide (E-2), in an amount of 0.05 to 2wt%, preferably 0.1 to 1 wt%, further preferably 0.1 to 0.5wt%, based on the total amount of components of the composition. When the amount of the metal compound component selected from metal hydroxide (E-1) and metal oxide (E-2) in the flame-retardant polyamide composition is 0.05wt% or more, it is possible to provide sufficient corrosive wear suppression effect. On the other hand, when the amount is 10wt% or less, flame retardancy, heat resistance, molding thermal stability do not decrease.

Metal hydroxide (E-1) and metal oxide (E-2) are preferably compounds which contain a metal element of Groups 2 to 12 in the periodic table. Metal hydroxide (E-1) and metal oxide (E-2) may be particles with an average particle diameter of 0.01-20 μm, preferably 0.01 to 5 μm, more preferably 0.01 to 3 μm, further preferably 0.01 to 1 μm, most preferably 0.01 to 0.3 μm.

In the second flame-retardant polyamide composition of the present invention, the metal compound component selected from metal hydroxide (E-1) and metal oxide (E-2) is considered to trap the decomposition product of flame retardant (C). Trapping of the decomposition product of flame retardant (C) is considered to take place mainly on the surface of metal hydroxide (E-1) and metal oxide (E-2). Thus, it may be advantageous that the metal compound component has a smaller particle diameter, i.e., larger specific surface area. Accordingly, metal hydroxide (E-1) and metal oxide (E-2) with a specific particle diameter range (e.g., average particle diameter of 0.01 to 20 μm) are considered as being advantageous in suppression of corrosive wear - a problem to be solved in the present invention.

The flame-retardant polyamide composition of the present invention meets UL94 V-0 flame rating. More specifically, the flame-retardant polyamide composition of the present invention preferably meets UL94 V-0 flame rating at 0.8 mm thickness or less.

In addition, the heat resistance temperature of the flame-retardant polyamide composition, as measured after subjected to moisture adsorption for 96 hours at 40˚C and at relative humidity of 95%, is preferably 245 to 280˚C, more preferably 250 to 280˚C, further preferably 255 to 280˚C, most preferably 255 to 270˚C.

The breaking energy of the flame-retardant polyamide composition of the present invention, which is the mechanical property indicative of toughness, is preferably 25 to 70 mJ, more preferably 40 to 70 mJ, further preferably 40 to 60 mJ. The flow length of the flame-retardant polyamide composition, upon injection molding of the resin into a bar-flow mold, is preferably 30 to 90 mm, more preferably 40 to 70 mm.

In a corrosive wear test using a injection molding machine, the corrosive wear ratio of a screw is preferably 0.01 to 2.7%, more preferably 0.01 to 2.5%, further preferably 0.01 to 2.2%.

As described above, the flame-retardant polyamide composition of the present invention has excellent features and is halogen-free (i.e., has lower chlorine and bromine contents). Thus, the risk of dioxin generation is small, molding thermal stability is high at high temperatures, and high flame retardancy is achieved when burned. Moreover, when processed in an extruder or molding machine, the flame-retardant polyamide composition of the present invention can suppress corrosive wear of steel members, such as a screw, cylinder, and dice. The flame-retardant polyamide composition of the present invention is particularly suitable for electric parts.

[Preparation Method of Flame-retardant Polyamide Composition]

The flame-retardant polyamide composition of the present invention can be produced with a known resin kneading method. For example, it is possible to employ a method in which the above-described components are mixed using Henschel Mixer, V-blender, Ribbon blender or tumble blender; or a method in which the mixture is further melt-kneaded using a single-screw extruder, multi-screw extruder, kneader or banbury mixer and then the kneaded product

is granulated or pulverized.

[Molded Article and Electric Part Material]

The flame-retardant polyamide composition of the present invention can be molded into various molded articles by using known molding methods, such as compression molding, injection molding, or extrusion molding. Among these methods, injection molding is preferable; by injection molding of the polyamide composition in an inert gas atmosphere such as nitrogen, argon or helium gas at a flow rate, for example, 0.1 to 10 ml/min, it is possible to further reduce corrosive wear of steel members, such as a screw and cylinder of a molding machine.

The flame-retardant polyamide composition of the present invention is excellent in molding thermal stability, heat resistance, and suppressing corrosive wear of steel members, and thus can be used in applications where these characteristics are required, or in the field of precise molding. Specific examples include electric parts such as automobile electrical components, circuit breakers, connectors, switches, jacks, plugs, breakers, and LED reflection materials, and molded articles such as coil bobbins and housings.

## Examples

Hereinafter, the present invention will be described in detail with reference to Examples, which however shall not be construed as limiting the scope of the invention thereto.

In Examples and Comparative Examples, measurements and evaluations of parameters are conducted in the manners given below.

[Intrinsic Viscosity [η]]

Intrinsic viscosity is measured in accordance with JIS K6810-1977. Sample solution is prepared by dissolving 0.5 g of polyamide resin in 50 ml of 96.5% sulfuric acid solution. The flow-down time of the sample solution is measured using a Ubbelohde viscometer at 25±0.05°C.
Intrinsic viscosity [η] is then calculated using the following equation:

$$[\eta] = \eta SP/[C(1+0.205\eta SP)]$$

where ηSP is (t-t0)/t0, [η] is intrinsic viscosity (dl/g), ηSP is specific viscosity, C is sample concentration (g/dl), t is sample flow-down time (sec), and t0 is flow-down time (sec) of sulfuric acid (blank).

[Melting Point (Tm)]

The melting point of the polyamide resin is measured using DSC-7 (PerkinElmer, Inc.). The polyamide resin is held at 330°C for 5 minutes, cooled to 23°C at a rate of 10°C/min, and then heated at a heating rate of 10°C/min. The endothermic peak based on the melting of the polyamide resin is employed as the melting point.

[MFR]

MFR of thermoplastic resins (B) is measured at a load of 5kg and at 316°C in accordance with ASTM D1238 Procedure B.

[Flammability Test]

Polyamide compositions formulated with the components shown in Tables 1 to 4 and Tables 5 and 6 are molded by injection molding under the following conditions to prepare test pieces (thickness: 1/32 inch, width: 1/2 inch, length: 5 inch). The test pieces are subjected to a vertical combustion test to evaluate their flame retardancy in accordance with the UL94 standard (UL Test No. UL94, June 18, 1991).

Molding machine: TUPARL TR40S3A (Sodick Plustech Co., Ltd.)
Cylinder temperature: polyamide resin melting point plus 10°C
Mold temperature: 120°C

[Heat Resistance Test]

Polyamide compositions formulated with the components shown in Tables 1 to 4 and Tables 5 and 6 are molded by injection molding under following conditions to prepare test pieces (length: 64 mm, width: 6 mm, thickness: 0.8 mm). The test pieces are allowed to stand in a humid atmosphere for 96 hours at 40˚C and at relative humidity of 95%.

Molding machine: TUPARL TR40S3A (Sodick Plustech Co., Ltd.)
Cylinder temperature: polyamide resin melting point plus 10˚C
Mold temperature: 100˚C

The test piece conditioned above is placed on a 1 mm-thick glass epoxy substrate. A temperature sensor is placed on the substrate. The glass epoxy substrate with the test piece is loaded in an air reflow soldering machine (AIS-20-82-C, manufactured by EIGHTECH TECTRON CO., LTD.), and a reflow soldering process is performed in accordance with the temperature profile shown in Fig.1. As depicted in Fig.1, the test piece is 1) heated to 230˚C at a predetermined heating rate, 2) heated to a predetermined set temperature ("a": 270˚C, "b": 265˚C, "c": 260˚C, "d": 255˚C, or "e": 235˚C) over 20 seconds, and 3) cooled back to 230˚C. The highest set temperature is found at which the test piece is not molten and no blister is observed on its surface. This highest set temperature is defined as a heat resistance temperature.

In general, test pieces subjected to moisture absorption tend to have lower heat resistance temperatures than completely-dried test pieces. In addiction, heat resistance temperature tends to decrease with decreasing polyamide resin-to-flame retardant ratio.

[Flexural test]

Polyamide compositions formulated with the components shown in Tables 1 to 4 and Tables 5 and 6 are molded by injection molding under following conditions to prepare test pieces (length: 64 mm, width: 6 mm, thickness: 0.8 mm).

Molding machine: TUPARL TR40S3A (Sodick Plustech Co., Ltd.)
Cylinder temperature: polyamide resin melting point plus 10˚C
Mold temperature: 100˚C

The test piece is allowed to stand in nitrogen gas atmosphere at 23˚C for 24 hours. Using a flexural tester (AB5, manufactured by NTESCO), flexural test is performed at 23˚C and at relative humidity of 50% under the following conditions: span = 26 mm, flexural rate = 5 mm/min. Based on flexural strength, distortion and modulus, the amount of energy required for breaking the test piece (toughness) is measured.

[Flow Length Test (Flow Ability)]

Polyamide compositions formulated with the components shown in Tables 1 to 4 and Tables 5 and 6 are molded by injection molding under the following condition using a bar-flow mold (width: 10 mm, thickness: 0.5 mm) to measure the flow length (mm) of resin in the mold.

Injection molding machine: TUPARL TR40S3A (Sodick Plustech Co., Ltd.)
Injection pressure: 2,000 kg/cm$^2$
Cylinder set temperature: polyamide resin melting point plus 10˚C
Mold temperature: 120˚C

[Evaluation of Corrosive Wear]

Using a connector mold with 14 terminals (molded article weight: 1g (including a sprue and a runner)), 10,000 shots are continuously made on an injection molding machine.

Injection molding machine: Sumitomo SE50DU
Cylinder set temperature: polyamide resin melting point plus 10˚C
Mold temperature: 100˚C

The weight of the screw of the injection molding machine is measured before and after injection molding to find corrosive wear ratio using the following equation:

Corrosive wear ratio(%)= [(screw weight before injection molding - screw weight after injection molding) / screw weight before injection molding] x 100

[Generated Gas Amount]

During flow length measurement, the amount of gas generated during molding is evaluated visually based on the following criteria: Sample with no gas generation is ranked ○ ; sample with less gas generation is ranked Δ; and sample with great gas generation and is problematic for usage, or sample in which resin is decomposed and is problematic for molding is ranked ×. Samples with excellent resin composition thermal stability generate less gas and showing less mold contamination are judged as having excellent moldability.
The following describes polyamide resin (A), thermoplastic resin (B) other than the polyamide resin (A), flame retardant (C), reinforcement (D), metal hydroxide (E-1), metal oxide (E-2) and other components used in Examples and Comparative Examples.

[Polyamide Resin (A)]

[Polyamide Resin (A-1)]

Composition: Dicarboxylic acid unit (terephthalic acid: 62.5mol% and adipic acid: 37.5mol%), Diamine unit (1,6-diaminohexane: 100mol%)
Intrinsic viscosity [η]: 0.8 dl/g
Melting point: 320˚C

[Polyamide Resin (A-2)]

Composition: Dicarboxylic acid unit (terephthalic acid: 55mol% and adipic acid: 45mol%), Diamine unit (1,6-diaminohexane: 100mol%)
Intrinsic viscosity [η]: 0.8 dl/g
Melting point: 310˚C

[Polyamide Resin (A-3)]

Composition: Dicarboxylic acid unit (terephthalic acid: 55mol% and adipic acid: 45mol%), Diamine unit (1,6-diaminohexane: 100mol%)
Intrinsic viscosity [η]: 1.0 dl/g
Melting point: 310˚C

[Polyamide Resin (A-4)]

Composition: Dicarboxylic acid unit (terephthalic acid: 100mol%), Diamine unit (2-methyl-1,5-diaminopentane: 50mol%, and 1,6-diaminohexane: 50mol%)
Intrinsic viscosity [η]: 0.9 dl/g
Melting point: 300 ˚C

[Thermoplastic Resin (B)]

As listed in Tables 1 to 4, several types of polyphenylene sulfide (PPS) are used. Chlorine amount, MFR, type (linear or crosslinked) are also listed in Tables 1 to 4. Any type of polyphenylene sulfide has a melting point of 280˚C.

[Flame Retardant (C)]

EXOLIT OP1230, manufactured by Clariant (Japan) K.K. phosphorous content = 23.8wt%

[Reinforcement (D)]

Glass fiber: CS 03JA FT789 (Owens Corning Japan Ltd.)

[Metal Hydroxide (E-1), Metal Oxide (E-2)]

Types, average particle diameters and, where necessary, BET specific surface areas of metal hydroxides and metal oxides are shown in Tables 1 to 6.

In addition to polyamide resin (A), thermoplastic resin (B), flame retardant (C) and reinforcement (D), zinc borate (flame retardant synergists, "Firebrake 500" manufactured by U.S. Borax), talc ("Hi-fller #100 Hakudo 95" manufactured by Matsumura Sangyo Co., Ltd.), and Calcium montanate ("Licomont CaV102" manufactured by Clariant (Japan) K.K.) are used.

[Examples 1 to 22] and [Comparative Examples 1 to 6]

The above components are mixed in proportions shown in Tables 1 to 4, and the mixtures are fed into a twin-screw vented extruder set to 320˚C, and then melt-kneaded to prepare flame-retardant polyamide compositions in the form of pellets. Subsequently, physical properties of the resulting flame-retardant polyamide compositions are evaluated, the results of which are shown in Tables 1 to 3 (Examples 1 to 22) and Table 4 (Comparative Examples 1 to 6).

[Examples 23 to 33], [Comparative Examples 7 to 12], and [Reference Example 13]

The above components are mixed in proportions shown in Tables 5 and 6, and the mixtures are fed into a twin-screw vented extruder set to 320˚C, and then melt-kneaded to prepare flame-retardant polyamide compositions in the form of pellets. Subsequently, physical properties of the resulting flame-retardant polyamide compositions are evaluated, the results of which are shown in Table 5 (Examples 23 to 33) and Table 6 (Comparative Examples 7 to 12 and Reference Example 13). Zinc oxide (E-2-1) used in Example 32 has an average particle diameter of 0.02 μm and a specific surface area of 37 $m^2$/g, and zinc oxide (E-2-5) used in Example 32 has an average particle diameter of 15.00 μm and a specific surface area of 2 $m^2$/g.

Table 1

| Examples | | 1 | 2 | 3 | 4 | 5 | 6 | 7 | 8 |
|---|---|---|---|---|---|---|---|---|---|
| Polyamide resin (A) | A-1 | 48.05 | 48.05 | | | | | | |
| | A-2 | | | 48.05 | 48.05 | 48.05 | 48.05 | 48.05 | 43.05 |
| | A-3 | | | | | | | | |
| Thermoplastic resin (B): Polyphenylene sulfide | Content | 10.00 | 10.00 | 10.00 | 10.00 | 10.00 | 10.00 | 10.00 | 15.00 |
| | Chlorine content (ppm) | 900 | 5500 | 900 | 5500 | 5500 | 5500 | 5500 | 900 |
| | Linear or crosslinked | Linear | Crosslinked | Linear | Crosslinked | Crosslinked | Crosslinked | Linear | Linear |
| | MFR(g/10min) | 130 | 130 | 130 | 130 | 650 | 2000 | 5000 | 130 |
| Flame retardant (C) | | 9.00 | 9.00 | 9.00 | 9.00 | 9.00 | 9.00 | 9.00 | 9.00 |
| Reinforcement (D) | | 30.00 | 30.00 | 30.00 | 30.00 | 30.00 | 30.00 | 30.00 | 30.00 |
| Flame retardant synergist: zinc borate | | 2.00 | 2.00 | 2.00 | 2.00 | 2.00 | 2.00 | 2.00 | 2.00 |
| Talc | | 0.70 | 0.70 | 0.70 | 0.70 | 0.70 | 0.70 | 0.70 | 0.70 |
| Calcium montanate | | 0.25 | 0.25 | 0.25 | 0.25 | 0.25 | 0.25 | 0.25 | 0.25 |
| Metal oxide (E-2): zinc oxide (average particle size: 0.02μm) | | | | | | | | | |
| Total | | 100.00 | 100.00 | 100.00 | 100.00 | 100.00 | 100.00 | 100.00 | 100.00 |
| Total content of Chlorine and bromine (ppm) | | 70 | 730 | 120 | 730 | 730 | 730 | 730 | 180 |
| Breaking energy (mJ) | | 52 | 54 | 59 | 61 | 54 | 55 | 50 | 52 |
| Flow length (mm) | | 47 | 46 | 48 | 47 | 51 | 51 | 55 | 48 |
| Heat resistance temperature (˚C) | | 260 | 260 | 255 | 255 | 250 | 250 | 245 | 255 |
| Corrosive wear ratio (%) | | 2.2 | | | | | 2.6 | 2.6 | 2.1 |
| Flame retardancy (UL94) | | V-0 | V-0 | V-0 | V-0 | V-0 | V-0 | V-0 | V-0 |

Table 2

| Examples | | 9 | 10 | 11 | 12 | 13 | 14 | 15 |
|---|---|---|---|---|---|---|---|---|
| Polyamide resin (A) | A-1 | | 43.05 | 43.05 | 43.05 | 42.65 | | 43.05 |
| | A-2 | | | | | | 32.05 | |
| | A-3 | 43.05 | | | | | | |
| Thermoplastic resin (B): Polyphenylene sulfide Polyphenylene sulfide | Content | 15.00 | 15.00 | 15.00 | 15.00 | 15.00 | 30.00 | 15.00 |
| | chlorine content (ppm) | 900 | 900 | 800 | 1500 | 900 | 900 | 5500 |
| | Linear or crosslinked | Linear | Linear | Linear | Linear | Linear | Linear | Linear |
| | MFR(g/10min) | 130 | 130 | 600 | 1300 | 130 | 130 | 130 |
| Flame retardant (C) | | 9.00 | 9.00 | 9.00 | 9.00 | 9.00 | 5.00 | 9.00 |
| Reinforcement (D) | | 30.00 | 30.00 | 30.00 | 30.00 | 30.00 | 30.00 | 30.00 |
| Flame retardant synergist: zinc borate | | 2.00 | 2.00 | 2.00 | 2.00 | 2.00 | 2.00 | 2.00 |
| Talc | | 0.70 | 0.70 | 0.70 | 0.70 | 0.70 | 0.70 | 0.70 |
| Calcium montanate | | 0.25 | 0.25 | 0.25 | 0.25 | 0.25 | 0.25 | 0.25 |
| Metal oxide (E-2): zinc oxide (average. particle size: 0.02μm) | | | | | | 0.40 | | |
| Total | | 100.00 | 100.00 | 100.00 | 100.00 | 100.00 | 100.00 | 100.00 |
| Total content of chlorine and bromine (ppm) | | 180 | 180 | 160 | 300 | 180 | 180 | 1000 |
| Breaking energy (mJ) | | 47 | 47 | 46 | 51 | 48 | 38 | 47 |
| Flow length (mm) | | 39 | 49 | 52 | 54 | 52 | 47 | 49 |
| Heat resistance temperature (˚C) | | 260 | 260 | 260 | 260 | 260 | 255 | 260 |
| Corrosive wear ratio (%) | | | 2.1 | | 2.2 | 1.7 | | 2.6 |
| Flame retardancy (UL94) | | V-0 | V-0 | V-0 | V-0 | V-0 | V-0 | V-0 |

Table 3

| Examples | | 16 | 17 | 18 | 19 | 20 | 21 | 22 |
|---|---|---|---|---|---|---|---|---|
| Polyamide resin (A) | A-1 | 42.65 | 42.65 | 42.65 | 42.65 | 42.65 | 42.65 | |
| | A-2 | | | | | | | |
| | A-3 | | | | | | | |
| | A-4 | | | | | | | 43.05 |
| Thermoplastic resin Polyphenylene (B): sulfide | Content | 15.00 | 15.00 | 15.00 | 15.00 | 15.00 | 15.00 | 10.00 |
| | Chlorine content (ppm) | 1500 | 1500 | 1500 | 1500 | 900 | 900 | 900 |
| | Linear or crosslinked | Linear | Linear | Linear | Linear | Linear | Linear | Linear |
| | MFR(g/10min) | 1300 | 1300 | 1300 | 1300 | 1300 | 1300 | 130 |

(continued)

| Examples | | 16 | 17 | 18 | 19 | 20 | 21 | 22 |
|---|---|---|---|---|---|---|---|---|
| Flame retardant (C) | | 9.00 | 9.00 | 9.00 | 9.00 | 9.00 | 9.00 | 9.00 |
| Reinforcement (D) | | 30.00 | 30.00 | 30.00 | 30.00 | 30.00 | 30.00 | 35.00 |
| Flame retardant synergist: zinc borate | | 2.00 | 2.00 | 2.00 | 2.00 | 2.00 | 2.00 | 2.00 |
| Talc | | 0.70 | 0.70 | 0.70 | 0.70 | 0.70 | 0.70 | 0.70 |
| Calcium montanate | | 0.25 | 0.25 | 0.25 | 0.25 | 0.25 | 0.25 | 0.25 |
| Metal oxide (E-2) | Magnesium oxide (E-2-2) | | | | | 0.40 | | |
| | Zinc oxide (E-2-3) | 0.40 | | | | | | |
| | Inc stannate (E-2-4) | | | | | | 2.00 | |
| | Zinc oxide (E-2-5) | | | | 0.40 | | | |
| | Zinc oxide (E-2-6) | | | 0.40 | | | | |
| | Zinc oxide (E-2-7) | | 0.40 | | | | | |
| | Ave. particle size (μm) | 0.30 | 0.70 | 2.00 | 15.00 | 0.90 | 2.20 | |
| Total | | 1.00.00 | 100.00 | 100.00 | 100.00 | 100.00 | 3.00.00 | 100.00 |
| Total content of chloride and bromine (ppm) | | 300 | 300 | 300 | 300 | 300 | 300 | 70 |
| Breaking energy (mJ) | | 41 | 36 | 36 | 51 | 43 | 45 | 50 |
| Flow length (mm) | | 47 | 47 | 46 | 46 | 59 | 60 | 15 5 |
| Heat resistance temperature (˚C) | | 260 | 260 | 260 | 260 | 250 | 255 | 245 |
| Corrosive wear ratio (%) | | 1.6 | 1.9 | 2.1 | 2.1 | 2.0 | 1.4 | 2.3 |
| Flame retardancy (UL94) | | V-0 | V-0 | V-0 | V-0 | V-0 | V-0 | V-0 |

Table 4

| Comparative Examples | | 1 | 2 | 3 | 4 | 5 | 6 |
|---|---|---|---|---|---|---|---|
| Polyamide resin (A) | A-1 A-2 | 58.05 | 57.05 | 53.05 | 54.05 | 52.05 | 12.05 |
| | A-3 | | | | | | |
| Thermoplastic resin (B): Polyphenylenesulfide | Content | | 1.00 | 1.00 | | 10.00 | 50.00 |
| | Chlorine content (ppm) | | 900 | 900 | | 900 | 900 |
| | Linear or crosslinked | | Linear | Linear | | Linear | Linear |
| | MFR(g/10min) | | 130 | 130 | | 130 | 130 |
| Flame retardant (C) | | 9.00 | 9.00 | 13.00 | 13.00 | 5.00 | 5.00 |
| Reinforcement (D) | | 30.00 | 30.00 | 30.00 | 30.00 | 30.00 | 30.00 |
| Flame retardant synergist: zinc borate | | 2.00 | 2.00 | 2.00 | 2.00 | 2.00 | 2.00 |
| Talc | | 0.70 | 0.70 | 0.70 | 0.70 | 0.70 | 0.70 |
| Calcium montanate | | 0.25 | 0.25 | 0.25 | 0.25 | 0.25 | 0.25 |
| Metal oxide (E-2): zinc oxide (average. particle diameter: 0.02μm) | | | | | | 0.40 | |

(continued)

| Comparative Examples | 1 | 2 | 3 | 4 | 5 | 6 |
|---|---|---|---|---|---|---|
| Total | 100.00 | 100.00 | 100.00 | 100.00 | 100.00 | 100.00 |
| Total content of chlorine and bromine ( ppm) | | 20 | 20 | | 120 | 600 |
| Breaking energy (mJ) | 68 | 65 | 62 | 63 | 62 | 15 |
| Flow length (mm) | 50 | 50 | 48 | 47 | 51 | 41 |
| Heat resistance temperature (˚C) | 255 | 255 | 260 | 260 | 255 | <240 |
| Corrosive wear ratio (%) | 2.2 | 2.2 | 2.8 | 2.8 | | |
| Flame retardancy (UL94) | V-1 | V-1 | V-0 | V-0 | V-1 | V-0 |

Table 5

| Examples | | 23 | 24 | 25 | 26 | 27 | 28 | 29 | 30 | 31 | 32 | 33 |
|---|---|---|---|---|---|---|---|---|---|---|---|---|
| Polyamide resin (A) | A-1 | 53.65 | | | 53.65 | 53-65 | 54.00 | 52.05 | 52.05 | 53.65 | 52.65 | 53.65 |
| | A-2 | | 53.65 | | | | | | | | | |
| | A-3 | | | 53.65 | | | | | | | | |
| Flame retardant(C) | | 13 | 13 | 13 | 13 | 13 | 13 | 13 | 13 | 13 | 13 | 13 |
| Reinforcement (D) | | 30 | 30 | 30 | 30 | 30 | 30 | 30 | 30 | 30 | 30 | 30 |
| Metal oxide (E-2) | Zinc oxide (E-2-1) | 0.40 | 0.40 | 0.40 | | | 0.05 | 2.00 | | | 1.00 | |
| | Magnesium oxide (E-2-2) | | | | 0.40 | | | | | | | |
| | Zinc oxide (E-2-3) | | | | | 0.40 | | | | | | |
| | Zinc stannate (E-2-4) | | | | | | | | 2.00 | | | |
| | Zinc oxide (E-2-5) | | | | | | | | | 0.40 | 0.40 | |
| Metal hydroxide (E-1) | Calcium hydroxide (E-1-2) | | | | | | | | | | | 0.40 |
| | Average. particle diameter (μm) | 0.02 | 0.02 | 0.02 | 0.90 | 0.30 | 0.02 | 0.02 | 2.20 | 15.00 | 0.02/15.00 | 8.60 |
| | Specific surface area ($m^2/g$) | 37 | 37 | 37 | 30 | 9 | 37 | 37 | 11 | 2 | 2 | 20 |
| Flame retardant synergist: zinc borate | | 2.00 | 2.00 | 2.00 | 2.00 | 2.00 | 2.00 | 2.00 | 2.00 | 2.00 | 2.00 | 2.00 |
| Talc | | 0.70 | 0 70 | 0.70 | 0.70 | 0.70 | 0.70 | 0.70 | 0.70 | 0.70 | 0.70 | 0.70 |
| Calcium montanate | | 0.25 | 0.25 | 0.25 | 0.25 | 0.25 | 0.25 | 0.25 | 0.25 | 0.25 | 0.25 | 0.25 |
| Total | | 100 | 100 | 100 | 100 | 100 | 100 | 100 | 100 | 100 | 100 | 100 |
| Breaking energy (mJ) | | 59 | 58 | 62 | 53 | 50 | 60 | 50 | 55 | 63 | 52 | 61 |
| Flow length (mm) | | 52 | 53 | 36 | 51 | 47 | 50 | 56 | 52 | 46 | 55 | 50 |
| Heat resistance temperature (˚C) | | 255 | 250 | 255 | 250 | 260 | 260 | 255 | 255 | 255 | 255 | 245 |
| Corrosive wear ratio (%) | | 2.1 | 2.1 | 2.1 | 2.5 | 2 | 2.5 | 1.9 | 1.8 | 2.7 | 2 | 2.3 |
| Flame retardancy (UL94) | | V-0 | V-0 | V-0 | V-0 | V-0 | V-0 | V-0 | V-0 | V-0 | V-0 | V-0 |
| Generated gas amount | | O | O | O | O | O | O | Δ | Δ | O | O | Δ |

Table 6

| Comparative Examples | | 7 | 8 | 9 | 10 | 11 | 12 | 13 (Reference Example) |
|---|---|---|---|---|---|---|---|---|
| Polyamide resin (A) | A-1 | 56.05 | 54.05 | 50.05 | 53.65 | 53.65 | 53.65 | 48.65 |
| | A-2 | | | | | | | |
| | A-3 | | | | | | | |
| Flame retardant (C) | | 13.00 | 13.00 | 13.00 | 13.00 | 13.00 | 13.00 | 13.00 |
| Reinforcement (D) | | 30.00 | 30.00 | 30.00 | 30.00 | 30.00 | 30.00 | 30.00 |
| Metal oxide (E-2) | Zinc oxide (E-2-1) | | | 4.00 | | | | 0.40 |
| | Aluminum oxide (E-2-6) | | | | 0.40 | | | |
| | Aluminum hydroxide (E-1-1) | | | | | 0.40 | | |
| | Tin oxide (E-2-7) | | | | | | 0.40 | |
| Metal hydroxide (E-1) | Zinc oxide (E-2-8) | | | | | | | |
| | Average particles diameter (μm) | | | 0.020 | 1.000 | 1.300 | 2.200 | 0.020 |
| | Specific surface area ($m^2/g$) | | | 37 | 5 | | 11 | 37 |
| Flame retardant synergist: zinc borate | | | 2.00 | 2.00 | 2.00 | 2.00 | 2.00 | 2.00 |
| Talc | | 0.70 | 0.70 | 0.70 | 0.70 | 0.70 | 0.70 | 0.70 |
| Calcium montanate | | 0.25 | 0.25 | 0.25 | 0.25 | 0.25 | 0.25 | 0.25 |
| Melamine polyphosphate | | | | | | | | 5.00 |
| Total | | 100.00 | 1.00.00 | 100.00 | 100.00 | 100.00 | 100.00 | 100.00 |
| Breaking energy (mJ) | | 68 | 63 | Resin decomposed | 42 | 65 | 55 | Resin decomposed |
| Flow length (mm) | | 55 | 47 | | 48 | 47 | 52 | |
| Heat resistance temperature (˚C) | | 260 | 260 | | 255 | 255 | 255 | |
| Corrosive wear ratio (%) | | 2.8 | 2.8 | | 3.1 | 3.8 | 3.2 | |
| Flame retardancy (UL94) | | V-1 | V-0 | | V-0 | V-0 | V-0 | |
| Generated gas amount | | O | O | × | O | O | O | X |

As seen from Tables 1 to 3, the flame-retardant polyamide compositions of Examples 1 to 22 contain proper amounts of thermoplastic resin (B) and flame retardant (C) and, therefore, exhibit high flame retardancy and heat resistance, as well as low corrosive wear ratio. On the other hand, as seen from Table 4, when thermoplastic resin (B) is not contained or when the total amount of thermoplastic resin (B) and flame retardant (C) is small (see Comparative Examples 1 to 5), it results in insufficient flame retardancy and/or high corrosive wear ratio. When thermoplastic resin

(B) is excessively contained (see Comparative Example 6), it results in reduced breaking energy and increased halogen (bromine and chlorine) content.

As seen from Table 5, the flame-retardant polyamide compositions of Examples 23 to 33 contain proper amounts of metal oxide (E-2) and, therefore, exhibit high flame retardancy and low corrosive wear ratio. On the other hand, as seen from Table 6. when a proper metal oxide is not contained (see Comparative Examples 7 and 8, and 10 to 12), it results in high corrosive wear ratio. Moreover, when zinc oxide is excessively contained (see Comparative Example 9), resin is decomposed during molding.

## Industrial Applicability

The flame-retardant polyamide composition of the present invention is free from halogen-based flame retardant, and exhibits high toughness, heat resistance and flame retardancy. Moreover, the flame-retardant polyamide composition of the present invention can suppress corrosive wear of steel members of molding machines and extruders. In particular, the flame-retardant polyamide composition of the present invention can be used for manufacture of electric parts which are for surface-mounting using high-melting point solder such as lead-free solder, preferably for manufacture of thin electric parts. Alternatively, the flame-retardant polyamides composition of the present invention can be used in applications where these characteristics are required, or in the field of precise molding.

## Claims

1. A flame-retardant polyamide composition comprising:

    20 to 60wt% polyamide resin (A);
    5 to 40wt% thermoplastic resin (B) other than polyamide resin (A);
    3 to 1.5wt% flame retardant (C) having no halogens in the molecule thereof; and
    0 to 50wt% reinforcement (D),

    wherein thermoplastic resin (B) meets UL 94 V-0 requirements, flame retardant (C) is a phosphinate, and a total amount of thermoplastic resin (B) and flame retardant (C) is 16 to 45wt%.

2. The flame-retardant polyamide composition according to claim 1. wherein thermoplastic resin (B) has a melting point and/or a glass transition temperature of 200 to 400˚C, and meets UL 94 V-0 requirements at 0.8mm thickness.

3. The flame-retardant polyamide composition according to claim 1, wherein wt% amount of thermoplastic resin (B) is equal to or larger than wt% amount of flame retardant (C).

4. The flame-retardant polyamide composition according to claim 1, wherein thermoplastic resin (B) is polyphenylene sulfide.

5. The flame-retardant polyamide composition according to claim 1, further comprising a metal compound component selected from metal hydroxide (E-1) and metal oxide (E-2), metal hydroxide (E-1) and metal oxide (E-2) having an average particle diameter of 0.01 to 20 nm.

6. The flame-retardant polyamide composition according to claim 5, wherein the metal compound component selected from metal hydroxide (E-1) and metal oxide (E-2) is at least one compound selected from the group consisting of metal oxides and composite oxides of zinc.

7. A flame-retardant polyamide composition comprising:

    20 to 80wt% polyamide resin (A);
    5 to 40wt% flame retardant (C) having no halogens in the molecule thereof;
    0 to 50wt% reinforcement (D); and
    0.05 to 2wt% metal compound component selected from metal hydroxide (E-1) and metal oxide (E-2),

    wherein flame retardant (C) is a phosphinate,
    metal hydroxide (E-1) and metal oxide (E-2) are a compound containing an element of Groups 2 to L2 in the periodic table, and

metal hydroxide (E-1) and metal oxide (E-2) have an average particle diameter of 0.01 to 20 μm.

**8.** The flame-retardant polyamide composition according to claim 7, wherein the metal compound component is metal oxide (E-2).

**9.** The flame-retardant polyamide composition according to claim 7, wherein the amount of polyamide resin (A) is 20 to 60wt%, and the amount of flame retardant (C) is 5 to 15wt%.

**10.** The flame-retardant polyamide composition according to claim 8, wherein metal oxide (E-2) has an average particle diameter of 0.01 to 10 μm.

**11.** The flame-retardant polyamide composition according to claim 8, wherein metal oxide (E-2) is at least one compound selected from the group consisting of oxides of iron, oxides of magnesium, oxides of zinc, and composite oxides of zinc.

**12.** The flame-retardant polyamide composition according to claim 11, wherein the composite oxide of zinc is zinc stannate.

**13.** The flame-retardant polyamide composition according to claim 1, wherein polyamide resin (A) has a melting point of 270 to 340°C.

**14.** The flame-retardant polyamide composition according to claim 1, wherein flame retardant (C) contains a phosphinate represented by formula (I), and/or a bisphosphinate represented by formula (II), and/or a polymer thereof:

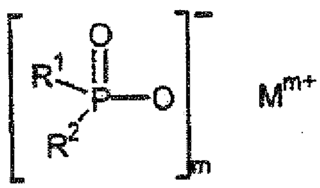

(I)

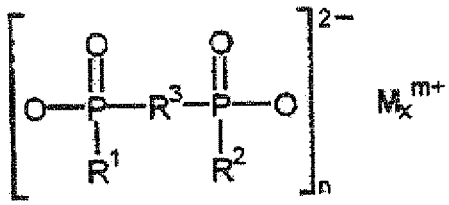

(II)

where $R^1$ and $R^2$, which are identical or different, are linear or branched $C_1$-$C_6$ alkyl and/or aryl; $R^3$ is linear or branched $C_1$-$C_{10}$ alkylene, $C_6$-$C_{10}$ arylene, $C_6$-$C_{10}$ alkylarylene, or $C_6$-$C_{10}$ arylalkylene; M is Mg, Ca, A1, Sb, Sn, Ge. Ti, On, Fe, Zr, Ce, Bi, Sr, Mn, Li, Na, K, and/or protonated nitrogen base; m is 1 to 4; n is 1 to 4; and x is 1 to 4.

**15.** The flame-retardant polyamide composition according to claim 1. wherein

polyamide resin (A) has multifunctional carboxylic acid unit (a-1) and multifunctional amine unit (a-2) having 4 to 25 carbon atoms,
the carboxylic acid unit (a-1) composed of 40 to 100mol% (terephthalic acid unit, 0 to 30mol% multifunctional aromatic carboxylic acid unit other than terephthalic acid, and/or 0 to 60mol% multifunctional aliphatic carboxylic acid unit having 4 to 20 carbon atoms.

**16.** The flame-retardant polyamide composition according to claim 1, wherein reinforcement (D) is fibrous material.

**17.** A molded article obtained by molding of the flame-retardant polyamide composition according to claim 1.

**18.** A method of manufacturing a molded article comprising:

injection molding the flame-retardant polyamides composition according to claim 1 in an inert gas atmosphere.

**19.** An electric part obtained by molding of the flame-retardant polyamide composition according to claim 1.

**20.** The flame-retardant polyamide composition according to claim 7, wherein polyamide resin (A) has a melting point of 270 to 340°C.

**21.** The flame-retardant polyamide composition according to claim 7, wherein flame retardant (C) contains a phosphinates represented by formula (1), and/or a bisphosphinate represented by formula (II), and/or a polymer thereof:

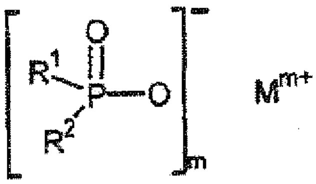

(I)

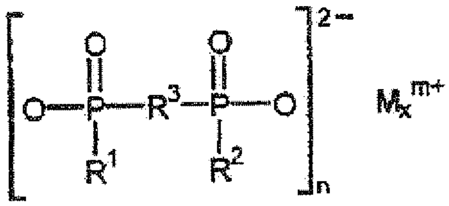

(II)

where $R^1$ and $R^2$, which are identical or different, are linear or branched $C_1$-$C_6$ alkyl and/or aryl; $R^3$ is linear or branched $C_1$-$C_{10}$ alkylene, $C_6$-$C_{10}$ arylene, $C_6$-$C_{10}$ alkylarylene, or $C_6$-$C_{10}$ arylalkylene; M is Mg, Ca, Al, Sb, Sn, Ge, Ti, Zn, Fe, Zr, Ce, Bi, Sr, Mn, Li, Na, K, and/or protonated nitrogen base; m is 1 to 4; n is 1 to 4; and x is 1 to 4.

**22.** The flame-retardant polyamide composition according to claim 7, wherein

polyamide resin (A) has multifunctional carboxylic acid unit (a-1) and multifunctional amine unit (a-2) having 4 to 25 carbon atoms,
the carboxylic acid unit (a-1) composed of 40 to 100mol% terephthalic acid unit, 0 to 30mol% multifunctional aromatic carboxylic acid unit other than terephthalic acid, and/or 0 to 60mol% multifunctional aliphatic carboxylic acid unit having 4 to 20 carbon atoms.

**23.** The flame-retardant polyamide composition according to claim 7, wherein reinforcement (D) is fibrous material.

**24.** A molded article obtained by molding of the flame-retardant polyamide composition according to claim 7.

**25.** A method of manufacturing a molded article comprising:

injection molding the flame-retardant polyamide composition according to claim 7 in an inert gas atmosphere.

**26.** An electric part obtained by molding of the flame-retardant polyamide composition according to claim 7.

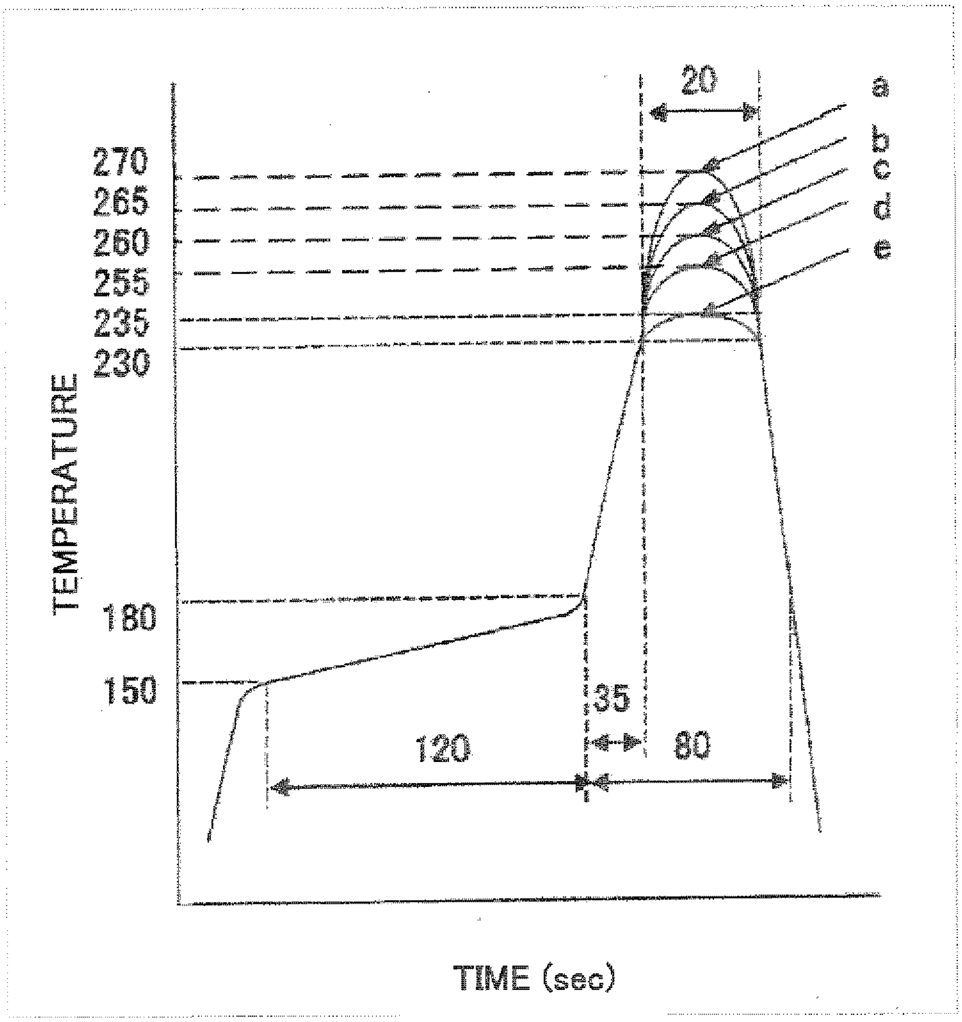
20
a
b
c
d
e
270
265
260
255
235
230
TEMPERATURE
180
150
35
120
80
TIME (sec)

FIG.1

## INTERNATIONAL SEARCH REPORT

International application No.
PCT/JP2009/007076

A. CLASSIFICATION OF SUBJECT MATTER
*C08L77/00*(2006.01)i, *C08K3/22*(2006.01)i, *C08K3/32*(2006.01)i

According to International Patent Classification (IPC) or to both national classification and IPC

B. FIELDS SEARCHED

Minimum documentation searched (classification system followed by classification symbols)
C08L77/00, C08K3/22, C08K3/32

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,X | JP 2009-270107 A (Cheil Industries Inc.), 19 November 2009 (19.11.2009), claims 1, 4; paragraphs [0027], [0084]; examples & US 2009/0275683 A & KR 10-0894884 B1 & CN 101570633 A | 1-4,13-17,19 |
| X<br>Y | JP 2007-023207 A (Asahi Kasei Chemicals Corp.), 01 February 2007 (01.02.2007), claims 1 to 4; paragraphs [0013], [0014], [0023], [0027]; examples (Family: none) | 7-11,20-26<br>1-6,12-19 |
| Y | JP 06-049356 A (Toray Industries, Inc.), 22 February 1994 (22.02.1994), claim 1; paragraphs [0002], [0036]; examples (Family: none) | 1-26 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>24 February, 2010 (24.02.10) | Date of mailing of the international search report<br>09 March, 2010 (09.03.10) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No. PCT/JP2009/007076

C (Continuation). DOCUMENTS CONSIDERED TO BE RELEVANT

| Category* | Citation of document, with indication, where appropriate, of the relevant passages | Relevant to claim No. |
|---|---|---|
| Y | JP 08-003327 A (Japan Synthetic Rubber Co., Ltd.), 09 January 1996 (09.01.1996), claim 1; examples (Family: none) | 1-14,16-21, 23-26 |
| Y | JP 2005-325358 A (Clariant GmbH), 24 November 2005 (24.11.2005), claims 1, 34, 42, 44; examples & US 2006/0084734 A1 & EP 1607400 A2 & DE 102004023085 A & AT 450542 T | 12 |
| X<br>Y | JP 2001-247751 A (Daicel Chemical Industries, Ltd.), 11 September 2001 (11.09.2001), claims 1, 6; paragraphs [0002], [0013], [0058], [0061]; examples & US 2001/0007888 A1 | 1-4,13-19<br>5-12,20-26 |
| P,A | WO 2009/096401 A1 (DIC Corp.), 06 August 2009 (06.08.2009), entire text & US 2009/0016261 A1 | 1-26 |
| A | JP 2008-007742 A (Dainippon Ink And Chemicals, Inc.), 17 January 2008 (17.01.2008), entire text & US 2009/0181234 A & EP 1978059 A1 & WO 2007/077831 A1 & KR 10-2008-0077641 A & CN 101346433 A | 1-26 |
| A | JP 03-182550 A (Japan Synthetic Rubber Co., Ltd.), 08 August 1991 (08.08.1991), entire text (Family: none) | 1-26 |
| A | JP 05-041664 B2 (Toray Industries, Inc.), 24 June 1993 (24.06.1993), entire text (Family: none) | 1-26 |

Form PCT/ISA/210 (continuation of second sheet) (July 2009)

**INTERNATIONAL SEARCH REPORT**

International application No.
PCT/JP2009/007076

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The invention in claim 1 and the invention in claim 7 have a technical feature common therebetween which resides in "a flame-retardant polyamide resin composition comprising 20-60 wt.% polyamide resin (A), 3-15 wt.% phosphinic acid compound (C), and 0-50 wt.% reinforcement (D)". However, this technical feature is not considered to be a special technical feature because that feature does not make a contribution over the prior art (see, JP 2001-247751 A ([claim 1], example)).

Therefore, the invention in claim 1 and the inventions in claims 7-12 and 20-26 do not have the same or corresponding special technical features.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006522842 A
- JP 2005036231 A
- JP 2007507595 A
- JP 2001247751 A